(19) Europäisches Patentamt
European Patent Office
Office européen des brevets

(11) **EP 4 443 188 A1**

(12) **EUROPEAN PATENT APPLICATION**

(43) Date of publication:
**09.10.2024 Bulletin 2024/41**

(21) Application number: **24163219.9**

(22) Date of filing: **13.03.2024**

(51) International Patent Classification (IPC):
**G01S 3/16** *(2006.01)*     **G01S 3/18** *(2006.01)*
**G01S 3/20** *(2006.01)*     **G01S 3/28** *(2006.01)*
**G01S 3/04** *(2006.01)*     **G01S 5/02** *(2010.01)*

(52) Cooperative Patent Classification (CPC):
**G01S 3/16; G01S 3/18; G01S 3/20; G01S 3/28;**
G01S 3/043; G01S 5/0273

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **21.03.2023 KR 20230036710**

(71) Applicants:
• **Kookmin University Industry Academy
Cooperation Foundation
Seoul 02707 (KR)**
• **Hongik University Industry-Academia
Cooperation Foundation
Mapo-gu, Seoul 04066 (KR)**

(72) Inventors:
• **JANG, Byung-Jun
Seoul (KR)**
• **CHOO, Hosung
Seoul (KR)**

(74) Representative: **Appleyard Lees IP LLP
15 Clare Road
Halifax HX1 2HY (GB)**

(54) **DIRECTION FINDING METHOD BASED ON UWB USING DIFFERENCE IN BEAM PATTERN OF ANTENNA, AND ELECTRONIC DEVICE FOR PERFORMING THE SAME**

(57)     A method of finding a direction of an ultra-wide band (UWB) using a difference between antenna beam patterns includes receiving a signal from a target device through at least one antenna configured to form a plurality of different beam patterns, obtaining a channel impulse response (CIR) of the received signal for each of the plurality of beam patterns, and finding the direction of the target device based on the CIR.

## FIG. 1

**Description**

**CROSS-REFERENCE TO RELATED APPLICATION**

This application is based on and claims priority under 35 U.S.C. §119 to Korean Patent Application No. 10-2023-0036710, filed on March 21, 2023, in the Korean Intellectual Property Office, the disclosure of which is incorporated by reference herein in its entirety.

**BACKGROUND**

1. Field

The disclosure relates to a method of finding a direction in a positioning technology based on ultra-wide band (UWB), and more particularly, to a method of finding a direction between UWB devices by using a difference in a beam pattern of an antenna.

This research was supported by the Samsung Future Technology Promotion Project (Project Number: SRFC-IT1801-51).

2. Description of the Related Art

Ultra-wide band (UWB) technology is a wireless technology that uses narrow pulses in the time domain, and has a much wider bandwidth than existing wireless communication technologies in the frequency domain. According to definition of the Federal Communications Commission (FCC), UWB technology means using a frequency bandwidth of 500 MHz or more.

UWB technology may be used to establish short-range wireless personal networks, and has been widely used in services using positioning due to the characteristics for measuring a distance between devices as well as wireless communication between devices.

High-rate pulse repetition frequency (HRP) UWB technology is a technology that uses a UWB symbol including a series of UWB pulses without using individual UWB pulses unlike the existing UWB technology and may improve the precision of distance measurement with the introduction of HRP UWB technology.

However, to provide a location based service using HRP UWB technology, not only a distance between UWB devices (e.g., UWB anchor and UWB tags) but also a direction thereof need to be found. Direction finding technology uses an antenna, and thus, direction finding technology was not introduced in the initial HRP UWB, and later direction finding was performed using a phase difference or arrival (PDoA) method, which uses a difference in arrival paths of radio waves received from two UWB antennas.

However, in the case of a PDoA method, multiple identical antennas need to be positioned at a half-wavelength interval of a carrier, which increases a space for installation of the antennas and is vulnerable to phase errors.

**SUMMARY**

Provided is a direction finding method based on a high-rate pulse repetition frequency ultra-wide band (HRP UWB) that reduces antenna design constraints and is free from effects of phase errors.

Additional aspects will be set forth in part in the description which follows and, in part, will be apparent from the description, or may be learned by practice of the presented embodiments of the disclosure.

According to an aspect of the disclosure, a method of finding a direction of an ultra-wide band (UWB) using a difference between antenna beam patterns includes receiving a signal from a target device through at least one antenna configured to form a plurality of different beam patterns, obtaining a channel impulse response (CIR) of the received signal for each of the plurality of beam patterns, and finding the direction of the target device based on the CIR.

According to another aspect of the disclosure, an electronic device for finding a direction using a difference between antenna beam patterns includes an antenna configured to form a plurality of different beam patterns, a memory configured to store a program therein for performing direction finding, and at least one processor, wherein, based on receiving a signal from a target device through the antenna, the processor is configured to obtain a channel impulse response (CIR) of the received signal for each of the plurality of beam patterns, and find the direction of the target device based on the CIR.

According to another aspect of the disclosure, a computer readable recording medium may have recorded thereon a program for executing the method.

According to another aspect of the disclosure, a computer program may be stored in a medium for performing at least one of the methods in a computer.

## BRIEF DESCRIPTION OF THE DRAWINGS

The above and other aspects, features, and advantages of certain embodiments of the disclosure will be more apparent from the following description taken in conjunction with the accompanying drawings, in which:

FIG. 1 is a diagram illustrating a system environment for performing ultra-wide band (UWB)-based positioning, according to an embodiment;

FIG. 2 is a diagram for explaining components included in a UWB device, according to an embodiment;

FIGS. 3 and 4 are flowcharts for explaining a UWB-based direction finding method, according to embodiments;

FIGS. 5A to 5D are diagrams for explaining an operation of receiving, by a UWB device, a signal through an antenna that forms a plurality of different beam patterns, according to embodiments;

FIG. 6 is a graph showing a channel impulse response (CIR) of a signal received from a UWB device, according to an embodiment;

FIGS. 7 and 8 are diagram for explaining a method of finding a direction of a UWB device transmitting a signal based on a CIR of signals received from a UWB device (anchor), according to an embodiment;

FIGS. 9 to 11 are flowcharts for explaining a method of identifying a surrounding object such as a wall while finding a direction of a UWB device in consideration of not only direct waves but also reflected waves, according to an embodiment;

FIGS. 12 to 14 are diagrams for explaining a two-phase positioning method, according to an embodiment;

FIG. 15 is a flowchart for explaining a two-phase positioning method, according to an embodiment;

FIG. 16 is a diagram for explaining a method of selecting a device on which secondary measurement (precise measurement) is to be performed in a two-phase positioning method, according to an embodiment;

FIG. 17 is a flowchart for explaining a method of selecting a device on which secondary measurement (precise measurement) is to be performed in a two-phase positioning method, according to an embodiment; and

FIG. 18 is a diagram for explaining an antenna for forming a plurality of different beam patterns, according to an embodiment.

## DETAILED DESCRIPTION

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects of the present description. As used herein, the term "and/or" includes any and all combinations of one or more of the associated listed items. Expressions such as "at least one of," when preceding a list of elements, modify the entire list of elements and do not modify the individual elements of the list.

With regard to the description of the disclosure, technical features that are not directly associated with the disclosure are not described here. Certain detailed explanations of related art are omitted for clarity when it is deemed that they may unnecessarily obscure the essence of the disclosure. The terms used in the specification are defined in consideration of functions used in the disclosure, and may be changed according to the intent or conventionally used methods of clients, operators, and users. Accordingly, definitions of the terms should be understood on the basis of the entire description of the present specification.

In the same reason, some components in the following drawings may be exaggerated, omitted, or schematically illustrated. The sizes of components do not reflect their actual sizes completely. The same reference number is given to the same or corresponding components in each drawing.

Advantages and features of the disclosure, and methods of achieving them may be clear with reference to the detailed description of the following embodiments taken in conjunction with the accompanying drawings. However, the disclosure is not limited to the embodiments disclosed below, but may be implemented in various different forms. These embodiments are intended to complete the disclosure, and are common in the art to which the disclosure belongs, and it is provided to fully inform the person skilled in the art of the scope of the disclosure. An embodiment is defined by the scope of the claims. Like reference numerals refer to like elements throughout the specification. In the following description of the disclosure, a detailed description of functions and configurations incorporated herein will be omitted when it may make the subject matter of the disclosure unclear. The following terms used in the specification are defined in consideration of functions used in the disclosure, and may be changed according to the intent or conventionally used methods of operators and users. Accordingly, definitions of the terms need to be understood on the basis of the entire description of the specification.

According to an embodiment, combinations of each block of flowcharts and the flowcharts may be performed by computer program instructions. Computer program instructions may be installed on a processor of a general computer, a special computer or other programable data processing equipment, and the instructions executed through the processor of the computer or other programable data processing equipment may generate an element for performing functions described in block(s) of flowcharts. Computer program instructions may be stored in computer available or computer readable memory that may aim for a computer or other data processing equipment to implement functions in a certain way, and instructions stored in the computer available or computer readable memory may also produce manufacturing items that contain instruction elements for performing the functions described in the block(s) of the flowcharts. It is also possible that computer program instructions are installed on a computer or other programable data processing equipment.

Each block of flowcharts may indicate a part of a module, segment or code including one or more executable instruments for executing a certain logical function(s). According to an embodiment, it is also possible that functions mentioned in the blocks are performed out of order. For example, two blocks that are consecutively shown may actually be performed at the same time, or in reverse order depending on the function.

The term "unit" in an embodiment means a software component or a hardware component, such as a field programmable gate array (FPGA) or an application specific integrated circuit (ASIC), that performs a certain function. However, the term "unit" is not limited to software or hardware. The "unit" may be formed to be stored in an addressable storage medium, or may be formed to operate one or more processors. In an embodiment, the term "unit" may refer to components such as software components, object-oriented software components, class components, and task components, processes, functions, attributes, procedures, subroutines, segments of program code, drivers, firmware, micro code, circuits, data, databases, data structures, tables, arrays, and parameters. Functions provided by certain elements and a certain "unit" may be combined in a smaller number of elements or may be separated into additional elements. In an embodiment, the "unit" may include one or more processors.

Prior to describing certain embodiments, the terms frequently used in the disclosure will be described.

The "beam pattern" of an antenna is a curve indicating a degree of emitting electromagnetic waves emitted from the antenna in each direction, and may indicate distribution of radio frequency (RF) energy that is emitted or received by the antenna. For example, when a signal in all directions of 360 degree of the antenna as a measurement target is received using a standard antenna and a strength of a received electric field is displayed at each angle, a waveform is drawn on a polar chart and is called a beam pattern of the antenna.

In the disclosure, "direction finding" refers to an operation of identifying a direction of a device transmitting a signal (radio wave) based on a direction of the signal. According to embodiments, an operation of finding relative directions between devices performing ultra-wide band (UWB) communication is performed. For example, a UWB device that receives a signal may find a direction of a UWB device that transmits the signal by measuring an incident angle of the signal.

A "single radiator multi port (SRMP) antenna" is an antenna including a plurality of feed ports formed on one radiator and has a beam pattern that may vary depending on a port to which a current is supplied. Thus, one SRMP antenna may form a plurality of different beam patterns.

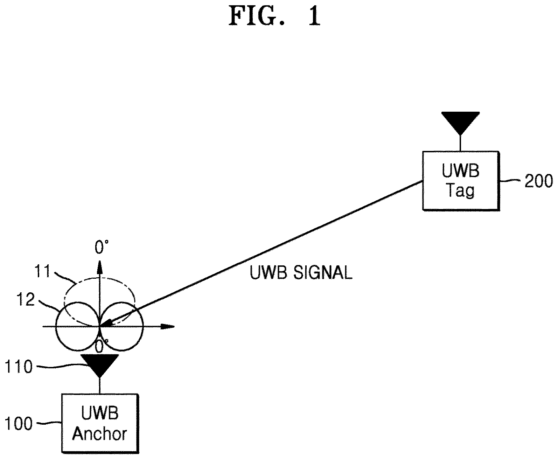

Hereinafter, detailed embodiments will be described with reference to the drawings. According to embodiments, UWB technology, especially high-rate pulse repetition frequency (HRP) UWB technology may be used for positioning. The HRP UWB has characteristics of using a UWB symbol including a plurality of UWB pulses differently from the existing UWB technology using individual UWB pulses. First, with reference to FIG. 1, UWB-based positioning technology will be described.

FIG. 1 is a diagram illustrating a system environment for performing UWB-based positioning, according to an embodiment. Referring to FIG. 1, a system may include two UWB devices such as a UWB anchor 100 and a UWB tag 200. In some embodiments, the system may be configured to include a plurality of UWB anchors and a plurality of UWB tags.

The UWB tag 200 may provide position information to the UWB anchor 100. Therefore, in the following embodiments, it is assumed that, when the UWB tag 200 transmits a signal (radio wave) to the UWB anchor 100, the UWB anchor 100 identifies a position (distance and direction) of the UWB tag 200 based on a received signal.

According to an embodiment, the UWB anchor 100 may measure a distance from the UWB tag 200 by using a two way ranging (TWR) method using a time of flight (ToF) that is a time during which a signal is transmitted and received between two devices. A distance between the UWB anchor 100 and the UWB tag 200 may be measured using various other methods. The TWR method is known technology and the disclosure relates to a direction finding method between the UWB devices 100 and 200, and thus a detailed description of a distance measurement method is omitted.

The existing UWB-based direction finding is performed using a phase difference of arrival (PDoA) method using a plurality of antennas apart from each other by a half-wavelength distance of a transmitted and received radio wave. The PDoA method is a technology that measures incident angles of signals (radio waves) received through different antennas by using a difference in arrival paths of the signals and the resulting phase difference of the signals. However, the PDoA method has the following limitations.

1) A plurality of antennas needs to be installed apart from each other by half a wavelength of a transmitted and received radio wave, and thus it is difficult to arrange the antennas.

2) Errors may occur due to effects of a ground plate and mutual coupling, and thus it is difficult to design antennas.

3) Due to sensitiveness to phase errors, calibration is required to reduce phase errors due to a feed line from an antenna to a receiver and phase errors of the receiver.

4) It may be possible to perform direction finding using a phase difference of direct waves alone in a line of sight (LoS), and thus errors increasingly occur in a non-line of sight (NLoS) in which direct waves are not visible.

To resolve this, according to embodiments, a signal is received using an antenna having two different beam patterns instead of using a phase difference between signals received for respective antennas and a direction is found based on a channel impulse response (CIR) of the received signal. When there is a difference between the beam patterns of the antenna, there is a difference in a CIR according to a direction in which a signal is received (an incident angle of radio waves), and according to embodiments, based on this fact, a direction of a UWB device transmitting a signal may be found.

Referring to FIG. 1, the UWB anchor 100 according to an embodiment may include an antenna 110 having a plurality of different beam patterns 11 and 12. In the embodiment shown in FIG. 1, the antenna 110 of the UWB anchor 100 may form a first beam pattern 11 in the form of a microstrip and a second beam pattern 12 in the form of a monopole.

The antenna 110 may simultaneously or alternately form the first beam pattern 11 and the second beam pattern 12. For example, when the UWB anchor 100 includes receivers corresponding to the respective beam patterns, the antenna 110 may receive a signal in a state in which the two beam patterns 11 and 12 are simultaneously formed. Alternatively, for example, when the UWB anchor 100 includes one receiver alone, the antenna 110 may alternately form the two beam patterns 11 and 12 through antenna switching, and thus may receive a signal through one beam pattern at one time.

The number and shape of the beam patterns formed by the antenna 110 may be implemented differently from the embodiment shown in FIG. 1. For example, the antenna 110 may form three or more beam patterns, and the shape of the beam pattern may also be a form other than a microstrip form or a monopole form shown in FIG. 1.

The structure and shape of the antenna 110 for forming multiple different beam patterns may be implemented in various ways. For example, the antenna 110 may include an SRMP antenna in which a plurality of feed ports are formed in one radiator. Alternatively, for example, the antenna 110 may include an antenna module including a plurality of antennas that form different beam patterns.

As shown in FIG. 1, when the UWB tag 200 transmits a UWB signal (UWB packet), the UWB anchor 100 may receive a UWB signal through the antenna 110 that forms the two beam patterns 11 and 12 to obtain a CIR for each beam pattern and find a direction of the UWB tag 200 based on the obtained CIR. A detailed method of obtaining a CIR for each beam pattern and finding a direction of the UWB tag 200 based on the obtained CIR will be described in detail with reference to other drawings below.

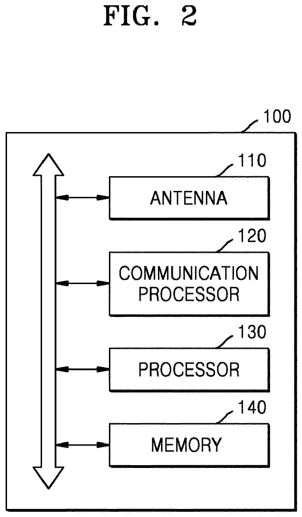

FIG. 2 is a diagram for explaining components included in a UWB device, according to an embodiment. FIG. 2 shows the components of the UWB anchor 100, but the UWB tag 200 may also include the same components.

Referring to FIG. 2, the UWB device 100 may include an antenna 110, a communication processor 120, a processor 130 and a memory 140.

The antenna 110 is a component configured to transmit or receive radio waves (signals). The antenna 110 used in embodiments may be various types of antennas that form a plurality of beam patterns with different forms.

The communication processor 120 is a component configured to communicate with other external devices. According to an embodiment, the communication processor 120 may include at least one receiver and at least one transmitter, and may include a switch that connects the antenna 110 to any one of the receiver or the transmitter. According to an embodiment, the communication processor 120 may also include a switch configured to change a beam pattern of the antenna 110 used when receiving signals.

A detailed example of the antenna 110 and the communication processor 120 will be described below with reference to other drawings below.

The processor 130 is a component configured to control a series of processes to allow the UWB device 100 to operate according to embodiments described below, and may include one or a plurality of processors. At this time, one or a plurality of processors include a general-purpose processor such as a CPU, an application processor (AP) and a digital signal processor (DSP), a graphic dedicated processor such as a GPU and a vision processing unit (VPU), or an artificial intelligent dedicated processor such as a neural processing unit (NPU). For example, when one or a plurality of processors are an artificial intelligent dedicated processor, the artificial intelligent dedicated processor may be designed as a hardware structure specialized in processing of a certain artificial intelligent model.

The processor 130 may record data in the memory 140 to be described below, or read the data stored in the memory 140, and in particular, process data according to a predefined operation rule or an artificial intelligent model by executing a program stored in the memory 140. Therefore, the processor 130 may perform operations described in the following embodiments, and it may be seen that the operations described to be performed by the UWB device 100 in the following embodiments are performed by the processor 130 unless otherwise stated.

In FIG. 2, the communication processor 120 and the processor 130 are shown to be separately present, but the communication processor 120 may also be included in the processor 130.

The memory 140 is a component configured to store various programs or data, and may include a storage medium such as ROM, RAM, hard disk, and CD-ROM and DVD, or a combination of storage media. The memory 140 may not exist separately but may be configured to be included in the processor 130. The memory 140 may include a volatile memory, a nonvolatile memory, or a combination of the volatile memory and the nonvolatile memory. A program for performing operations according to embodiments described below may be stored in the memory 140. The memory 140 may provide the stored data to the processor 130 in response to a request of the processor 130.

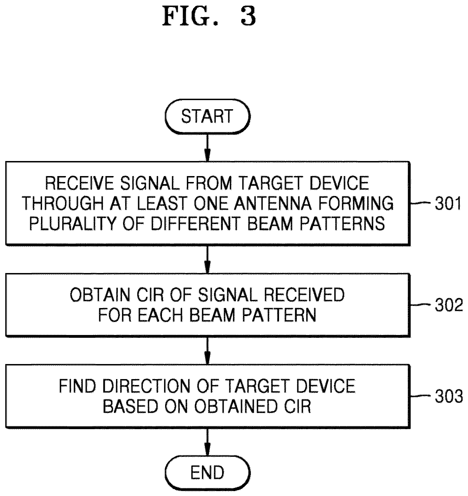

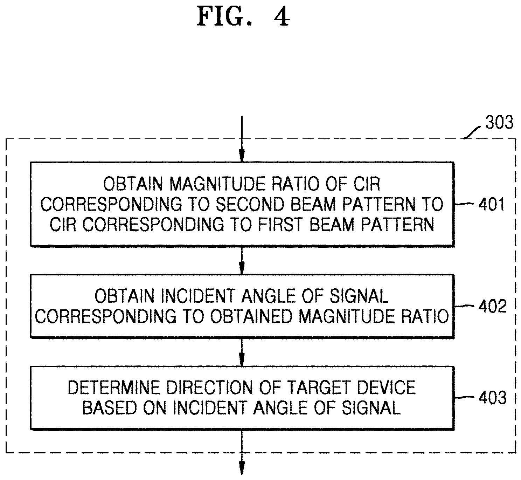

FIGS. 3 and 4 are flowcharts for explaining a UWB-based direction finding method, according to embodiments.

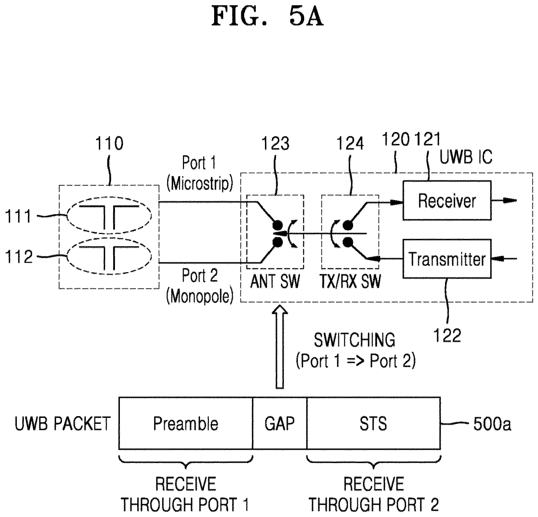

Referring to FIG. 3, in operation 301, the UWB anchor 100 may receive a signal (radio wave) from a target device (e.g., the UWB tag 200) through at least one antenna 110 that forms a plurality of different beam patterns. An operation of receiving a signal through the antenna 110 that forms a plurality of different beam patterns by the UWB anchor 100 according to an embodiment will be described in detail with reference to FIGS. 5A to 5D.

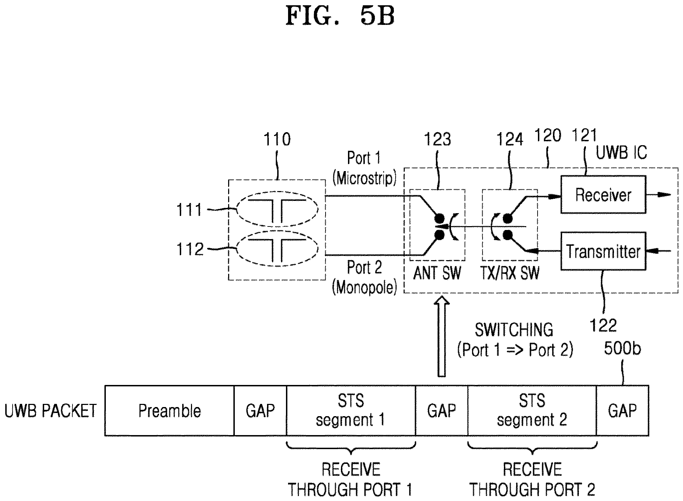

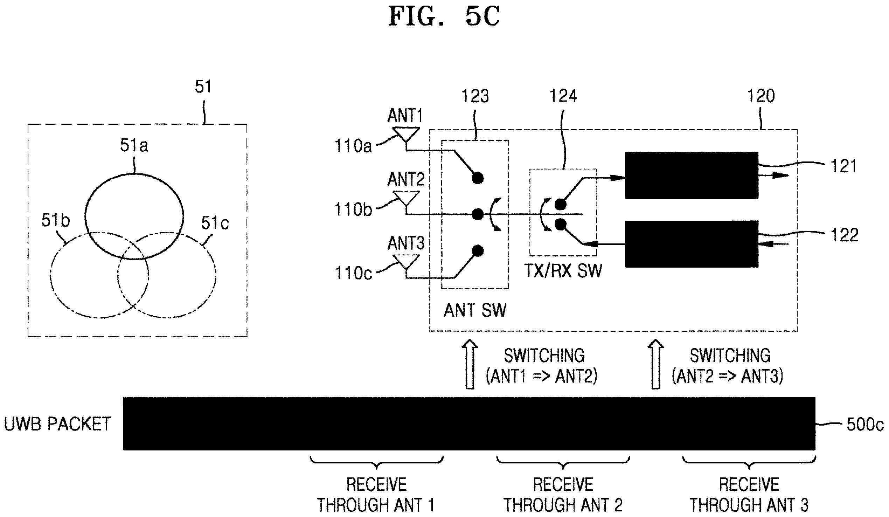

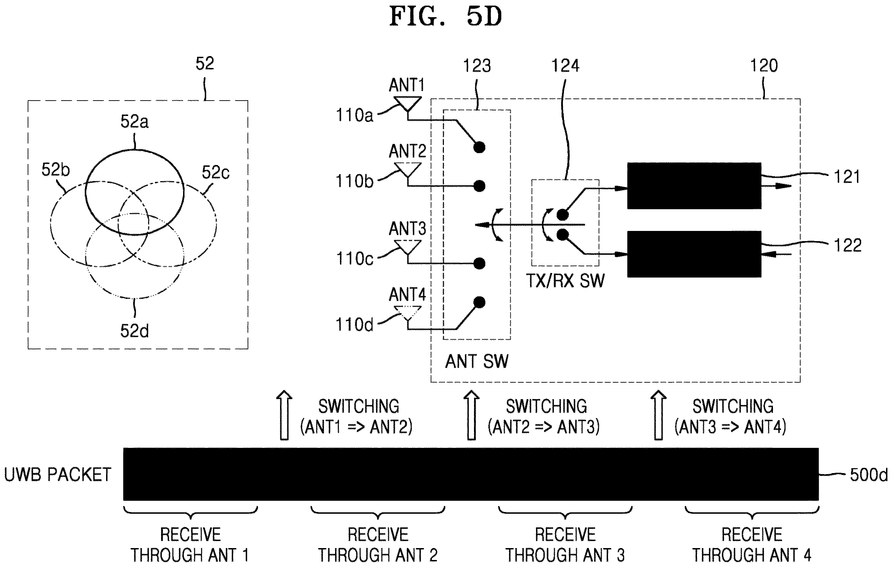

FIGS. 5A to 5D are diagrams for explaining an operation of receiving a signal through an antenna that forms a plurality of different beam patterns by a UWB device, according to embodiments. FIGS. 5A and 5B illustrate an example in which antenna switching is performed while UWB packets 500a and 500b are received through an antenna in which a plurality of ports 111 and 112 are formed. FIGS. 5A and 5B are different in the UWB packets 500a and 500b received by the UWB anchor 100. FIG. 5C illustrates an embodiment in which the UWB anchor 100 including three antennas 110a, 110b, and 110c receives a UWB packet 500c. FIG. 5D illustrates an embodiment in which the UWB anchor 100 including four antennas 110a, 110b, 110c, and 110d receives a UWB packet 500d.

Referring to FIG. 5A, the antenna 110 may include a first port 111 for forming the first beam pattern 11 and a second port 112 for forming the second beam pattern 12. The communication processor 120 may include a receiver 121 and a transmitter 122. The communication processor 120 may include an antenna switch 123 configured to switch between the two ports 111 and 112, and a transmission and reception switch 124 configured to switch between the receiver 121 and the transmitter 122. The communication processor 120 may select a port that receives a signal through a switching operation of the antenna switch 123. In other words, the communication processor 120 may control a beam pattern formed in the antenna 110 when receiving a signal through the switching operation of the antenna switch 123.

An operation of performing antenna switching by the communication processor 120 assuming that the UWB anchor 100 receives the UWB packet 500a shown in FIG. 5A will be described. The UWB packet 500a according to an embodiment may include three segments Preamble, GAP, and STS as shown in FIG. 5A. For reference, the scrambled timestamp sequence (STS) is a field of an encryption function that is added in IEEE 802.15.4z-2020 HRP UWB standardized in 2020. Due to use of the STS field for direction finding, an antenna (e.g., switched array antenna) with a simpler hardware structure may be used than using two receivers that share a clock.

According to an embodiment, the communication processor 120 may connect the antenna switch 123 to the first port 111 when reception of the UWB packet 500a begins, and thus may receive the segment Preamble in a state in which the first beam pattern 11 is formed in the antenna 110. The communication processor 120 may receive the segment STS of the UWB packet 500a in a state in which the second beam pattern 12 is formed in the antenna 110 by changing the antenna switch 123 to be connected to the second port 112 in the segment GAP after the segment Preamble is completely received.

As such, the communication processor 120 may control a switching operation of the antenna switch 123 to receive segments included in one packet in a state in which different beam patterns are formed in the antenna 110.

Alternatively, according to an embodiment, the communication processor 120 may include receivers corresponding to the first port 111 and the second port 112, respectively, and thus receive the entire UWB packet 500a in a state in which the first beam pattern 11 and the second beam pattern 12 are simultaneously formed in the antenna 110.

With reference to FIG. 5B, an operation of performing antenna switching by the communication processor 120 assuming that the UWB anchor 100 receives the UWB packet 500b shown in FIG. 5B will be described. The configuration of the antenna 110 and the communication processor 120 shown in FIG. 5B is the same as the configuration shown in FIG. 5A, and thus a detailed description of the above configuration is omitted. The UWB packet 500b according to an embodiment may include a segment Preamble and a plurality of STS segments STS segment 1 and STS segment 2 as shown in FIG. 5B.

According to an embodiment, the communication processor 120 may connect the antenna switch 123 to the first port 111 when STS segment 1 of the UWB packet 500b is received, and thus may receive STS segment 1 in a state in which the first beam pattern 11 is formed in the antenna 110. The communication processor 120 may receive STS segment 2 of the UWB packet 500b in a state in which the second beam pattern 12 is formed in the antenna 110 by changing the antenna switch 123 to be connected to the second port 112 in the segment GAP after STS segment 1 is completely received.

Referring to FIG. 5C, the UWB anchor 100 is configured to include three antennas 110a, 110b, and 110c. The three antennas 110a, 110b, and 110c form different beam patterns, respectively, and the beam patterns formed by the respective antennas 110a, 110b, and 110c are shown in an area 51. A first antenna 110a may form a first beam pattern 51a, a second antenna 110b may form a second beam pattern 51b, and a third antenna 110c may form a third beam pattern 51c. As shown in FIG. 5C, the three beam patterns 51a, 51b, and 51c are arranged to have maximum values at intervals of 120 degrees. The antennas 110a, 110b, and 110c may be arranged to form the beam patterns 51a, 51b, and 51c as such, and thus a magnitude ratio of CIRs may be clearly distinguished according to an incident angle of a signal.

The UWB anchor 100 may receive the UWB packet 500c for the respective segments through different beam patterns by switching between the antennas 110a, 110b, and 110c that form the beam patterns 51a, 51b, and 51c are formed as such. Referring to FIG. 5C, the communication processor 120 may connect the antenna switch 123 to the first antenna 110a when STS segment 1 of the UWB packet 500c is received, and thus may receive STS segment 1 in a state in which the first beam pattern 51a is formed. The communication processor 120 may receive STS segment 2 of the UWB packet 500c in a state in which the second beam pattern 51b is formed by changing the antenna switch 123 to be connected to the second antenna 110b in the segment GAP after STS segment 1 is completely received. The communication processor 120 may receive STS segment 3 of the UWB packet 500c in a state in which the third beam pattern 51c is formed by changing the antenna switch 123 to be connected to the third antenna 110c in the segment GAP after STS segment 2 is completely received.

Referring to FIG. 5D, the UWB anchor 100 is configured to include four antennas 110a, 110b, 110c, and 100d. The four antennas 110a, 110b, 110c, and 110d form different beam patterns, respectively, and the beam patterns formed by the respective antennas 110a, 110b, 110c, and 110d are shown in an area 52. The first antenna 110a may form a first beam pattern 52a, the second antenna 110b may form a second beam pattern 52b, the third antenna 110c may form a third beam pattern 52c, and a fourth antenna 110d may form a fourth beam pattern 52d. As shown in FIG. 5D, the four beam patterns 52a, 52b, 52c, and 52d are arranged to have maximum values at intervals of 90 degrees. The antennas 110a, 110b, 110c, and 110d may be arranged to form the beam patterns 52a, 52b, 52c, and 52d as such, and thus a magnitude ratio of CIRs may be clearly distinguished according to an incident angle of a signal.

The UWB anchor 100 may receive the UWB packet 500d for the respective segments through different beam patterns by switching between the antennas 110a, 110b, 110c, and 100d that form the beam patterns 52a, 52b, 52c, and 52d are formed as such. Referring to FIG. 5D, the communication processor 120 may connect the antenna switch 123 to the first antenna 110a when the segment Preamble of the UWB packet 500d is received, and thus may receive the segment Preamble in a state in which the first beam pattern 52a is formed. The communication processor 120 may receive STS segment 1 of the UWB packet 500d in a state in which the second beam pattern 52b is formed by changing the antenna switch 123 to be connected to the second antenna 110b in the segment GAP after the segment Preamble is completely received. The communication processor 120 may receive STS segment 2 of the UWB packet 500d in a state in which the third beam pattern 52c is formed by changing the antenna switch 123 to be connected to the third antenna 110c in the segment GAP after STS segment 1 is completely received. The communication processor 120 may receive STS segment 3 of the UWB packet 500d in a state in which the fourth beam pattern 52d is formed by changing the antenna switch 123 to be connected to the fourth antenna 110d in the segment GAP after STS segment 2 is completely received.

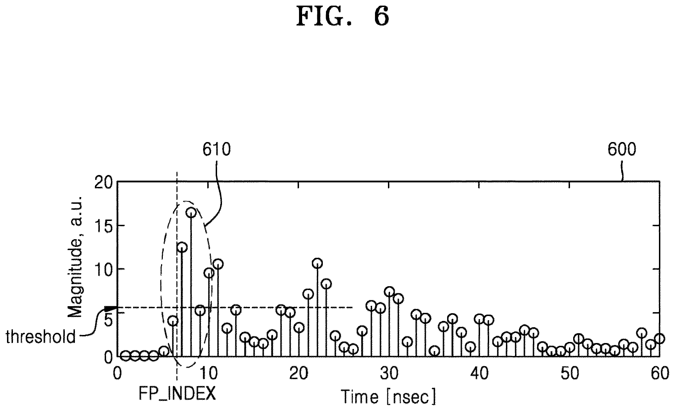

Referring back to FIG. 3, in operation 302, the UWB anchor 100 may obtain a CIR of a signal received for each beam pattern. A method of obtaining a CIR for a received signal will be described in detail with reference to FIG. 6.

FIG. 6 is a graph showing a CIR of a signal received from a UWB device, according to an embodiment.

A UWB signal has a small pulse width, and thus one transmitted UWB pulse may be assumed to be an impulse signal. In HRP UWB, a UWB symbol includes a plurality of UWB pulses (e.g., 31 or 127 UWB pulses configure one UWB symbol), and thus the UWB anchor 100 may obtain a CIR using the correlation characteristics of the UWB symbol. In detail, the UWB tag 200 transmits a UWB symbol including a plurality of UWB pulses, and the UWB anchor 100 receives the UWB symbol and demodulates the UWB symbol through a correlation operation, and in this case, the result of the correlation operation corresponds to a CIR. That is, the result of performing an auto correlation operation for the UWB symbol received by the UWB anchor 100 corresponds to a CIR. In this case, the CIR is the result of the correlation operation, and thus the CIR is not related to a shape of a UWB pulse, a point with a high correlation value alone is significant, and correlation values at other points correspond to noise.

According to an embodiment, the UWB anchor 100 may obtain a received signal strength (RSS) using correlation values included in a peak region 610 among correlation values shown in a graph 600. For example, when a point at which a correlation value first starts to become larger than a threshold is defined as FP_INDEX, the UWB anchor 100 may obtain the RSS using first three correlation values after the FP_INDEX, and this may be expressed according to Equation 1 below.

Equation 1

$$RSS = 10 \, log_{10} \left( \frac{F_1^2 + F_2^2 + F_3^2}{N^2} \right) + 6D - A$$

In this case, $F_1$, $F_2$, and $F_3$ refer to sizes of first three correlation values after FP_INDEX, N refers to the number of UWB symbols included in a received signal packet, D is a value related to tuning of a receiver included in the UWB anchor 100, and A refers to an offset value.

According to an embodiment, the UWB anchor 100 may perform direction finding using the RSS calculated through the above process as a "magnitude of CIR" corresponding to a received signal. The UWB anchor 100 may also obtain the magnitude of the CIR corresponding to the received signal by using another method. For example, the UWB anchor 100 may specify a certain time from FP_INDEX as the peak region 610, and may use the largest value of correlation values included in the peak region 610 as the magnitude of the CIR. The UWB anchor 100 may obtain a value indicating the magnitude of the CIR by using various other methods.

Referring back to FIG. 3, in operation 303, the UWB anchor 100 may find a direction of a target device based on the obtained CIR. The characteristics of the CIR may vary depending on a beam pattern that is formed in the antenna 110 when a signal is received. In other words, even if a signal is received through the same beam pattern, a difference in a CIR may be generated according to an incident angle of the signal, and even if incident angles of signals are the same, when beam patterns are different, a difference in the CIR may be generated. Thus, the UWB anchor 100 may find a direction of a target device transmitting a signal based on a CIR obtained by receiving the signal. FIG. 4 illustrates detailed operations included in operation 303 of FIG. 3.

Referring to FIG. 4, in operation 401, the UWB anchor 100 may obtain a magnitude ratio of a CIR corresponding to the second beam pattern 12 to a CIR corresponding to the first beam pattern 11. In operation 402, the UWB anchor 100 may obtain an incident angle of a signal corresponding to the obtained magnitude ratio of CIRs, and in operation 403, the UWB anchor 100 may determine a direction of a target device based on the incident angle of the signal.

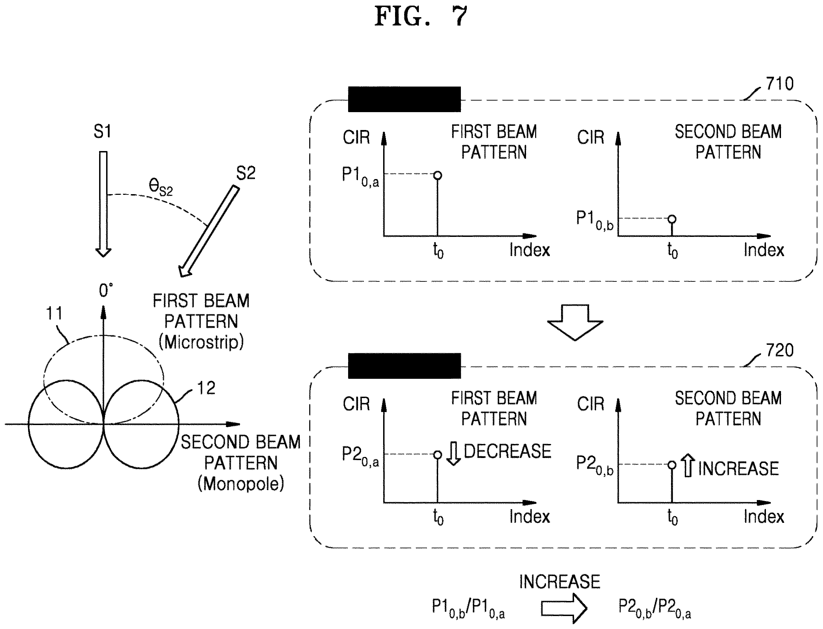

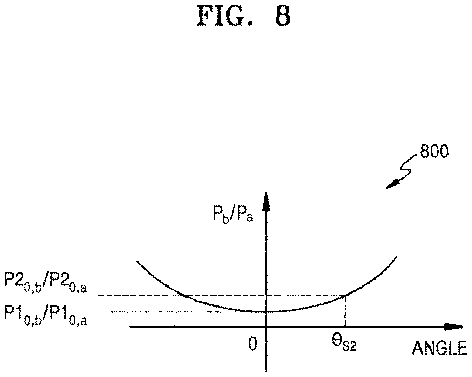

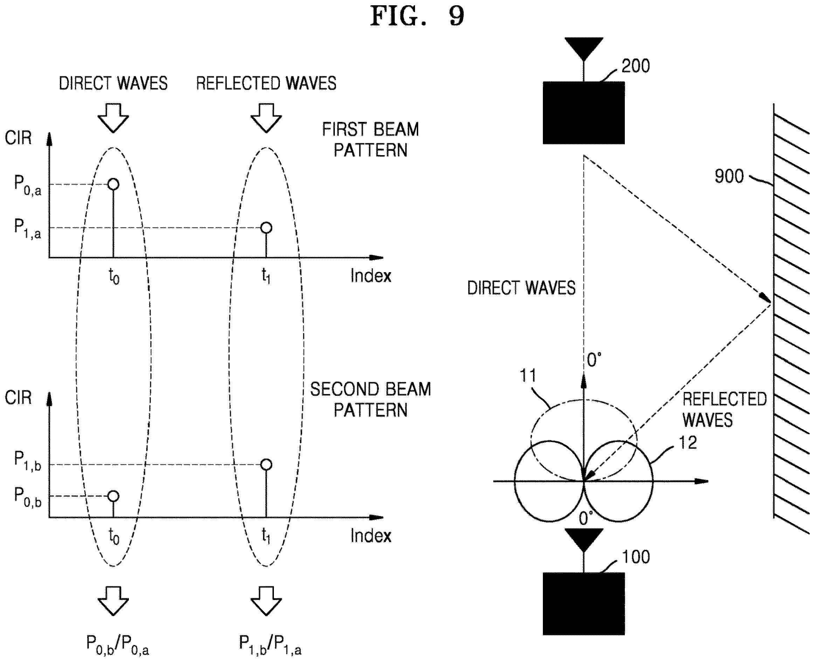

A detailed method of performing operations of FIG. 4 will be described in detail with reference to FIGS. 7 to 11 below. FIGS. 7 and 8 illustrate an embodiment in which a direction of a target device is found in consideration of direct waves alone. FIGS. 9 to 11 illustrate an embodiment in which a direction of the target device is found in consideration of both direct waves and reflected waves.

FIG. 7 illustrates a situation in which a first signal S1 and a second signal S2 are received through the two beam patterns 11 and 12 of the antenna 110, and a right side of FIG. 7 illustrates graphs 710 and 720 showing the magnitude of a CIR obtained for each of the beam patterns 11 and 12 with respect to each of the two signals S1 and S2. In the embodiment shown in FIG. 7, it is assumed that an incident angle of the first signal S1 is 0 degree and an incident angle of the second signal S2 is $\theta_{S2}$ degrees. According to an embodiment, as described in FIG. 5, the communication processor 120 may obtain a CIR for each beam pattern with respect to each of the signals S1 and S2 through antenna switching. When receiving the signals S1 and S2 while the first beam pattern 11 and the second beam pattern 12 are alternately formed through antenna switching, the UWB anchor 100 may obtain the graphs 710 and 720 of FIG. 7 by synchronizing time indexes.

First, as seen from a first graph 710 corresponding to the first signal S1, the magnitude of a CIR corresponding to the first beam pattern 11 may be $P1_{0,a}$, and the magnitude of a CIR corresponding to the second beam pattern 12 may be $P1_{0,b}$. The magnitude of the CIR corresponding to each of the beam patterns 11 and 12 may be obtained using the method described above with reference to FIG. 6. A magnitude ratio of a CIR obtained by performing operation 401 on the first signal S1 by the UWB anchor 100, that is, a magnitude ratio of a magnitude of the CIR corresponding to the second beam pattern 12 to a magnitude of the CIR corresponding to the first beam pattern 11 may be $P1_{0,b}/P1_{0,a}$.

Similarly, as seen from a second graph 720 corresponding to the second signal S2, the magnitude of a CIR corresponding to the first beam pattern 11 may be $P2_{0,a}$, and the magnitude of a CIR corresponding to the second beam pattern 12 may be $P2_{0,b}$. The magnitude of the CIR corresponding to each of the beam patterns 11 and 12 may also be obtained using the method described above with reference to FIG. 6. A magnitude ratio of a CIR obtained by performing operation 401 on the second signal S2 by the UWB anchor 100, that is, a magnitude ratio of a magnitude of the CIR corresponding to the second beam pattern 12 to a magnitude of the CIR corresponding to the first beam pattern 11 may be $P2_{0,b}/P2_{0,a}$

As seen from FIG. 7, the magnitude of the CIR corresponding to the first beam pattern 11 may have a maximum value when an incident angle of a signal is 0 degree, and the magnitude of the CIR corresponding to the first beam pattern 11 may degrease as the incident angle of the signal increases. In contrast, it may be seen that the magnitude of the CIR corresponding to the second beam pattern 12 has a minimum value when the incident angle of the signal is 0 degree, and the magnitude of the CIR corresponding to the first beam pattern 11 increases as the incident angle of the signal increases.

Therefore, a magnitude ratio $P_b/P_a$ of the CIR corresponding to the second beam pattern 12 to the CIR corresponding to the first beam pattern 11 has a minimum value when the incident angle of the signal is 0 degree, and the magnitude ratio $P_b/P_a$ increases as the incident angle of the signal increases.

As such, the magnitude ratio of the CIRs corresponding to the two beam patterns 11 and 12 is changed depending on the incident angle of the signal, and thus when the UWB anchor 100 pre-recognizes information on the incident angle corresponding to a magnitude ratio of various CIRs, the UWB anchor 100 may obtain the incident angle of the signal from the magnitude ratio of the CIRs obtained in operation 401.

FIG. 8 illustrates a graph 800 showing a change in a magnitude ratio of CIRs corresponding to the two beam patterns 11 and 12 depending on an incident angle of a signal. As seen from FIG. 8, the magnitude ratio of CIRs may have a minimum value when the incident angle of the signal is 0 degree, and the magnitude ratio of the CIRs may increase as the incident angle of the signal increases. This is consistent with the above description given with reference to FIG. 7.

When the UWB anchor 100 previously has information about the graph 800 of FIG. 8, the UWB anchor 100 may determine that the incident angle of the signal is 0 degree when the magnitude ratio of the CIR is $P1_{0,b}/P1_{0,a}$ and determine that the incident angle of the signal is $\theta_{S2}$ degrees when the magnitude ratio of the CIR is $P2_{0,b}/P2_{0,a}$.

A method in which the UWB anchor 100 pre-obtains information about an incident angle corresponding to a magnitude ratio of CIRs, as in the graph 800 of the 800, may be implemented in various ways. According to an embodiment, a magnitude ratio of beam patterns may be calculated for each incident angle of a signal using a beam pattern in a vertical direction and a horizontal direction, which are to be identified during an antenna design, and a magnitude ratio of CIRs may be obtained therefrom. The magnitude ratio of CIRs is proportional to the magnitude ratio of beam patterns. Alternatively, according to an embodiment, a UWB transmitter (e.g., the UWB tag 200) and a UWB receiver (e.g., the UWB anchor 100) may be installed in an anechoic room, and the magnitude ratio of CIRs may be measured for each incident angle of a signal and prestored. When the information obtained in this method is pre-stored in the memory 140 of the UWB anchor 100, the UWB anchor 100 may determine an incident angle corresponding to the magnitude ratio of CIRs.

According to an embodiment, the graph 800 of FIG. 8 may be based on a graph of the basic microstrip and monopulse beam characteristics, and may be acquired by measuring the beam pattern characteristics of an actual antenna.

However, when a direction is found using a CIR for direct waves alone as in the embodiment shown in FIGS 7 and 8, the incident angle of the signal may be measured, but there is a limitation in that it is difficult to distinguish between left and right. As a method of resolving this, it is possible to distinguish whether the direction in which the signal is incident is left or right by using a quadrature receiver and a hybrid antenna using two signals of an in-phase signal (I signal) and a quadrature-phase signal (Q signal). As in the embodiment described with reference to FIGS. 9 to 11, it may be possible to identify a surrounding environment such as a wall or an object to distinguish between left and right in consideration of not only direct waves but also reflected waves.

Referring to FIG. 9, there is an obstacle 900 in an environment in which the UWB anchor 100 and the UWB tag 200 perform communication. In general, in a device that receives a signal, direct waves for directly receiving a transmission signal and reflected waves for reflecting the transmission signal by a surrounding environment and receiving the signal may overlap and may be received. That is, among radio waves transmitted by the UWB tag 200, radio waves that directly reach the UWB anchor 100 are direct waves, and radio waves that are reflected by the obstacle 900 and reach the UWB anchor 100 are reflected waves.

A left side of FIG. 9 shows a graph showing magnitudes of CIRs corresponding to direct waves and reflected waves for the two beam patterns. In graphs shown in FIG. 9, it is assumed that the direct waves are received at $t_0$ and the reflected waves are received at $t_1$.

Referring to FIG. 9, the magnitude of a CIR of the direct waves received through the first beam pattern 11 is $P_{0,a}$, and the magnitude of a CIR of the reflected waves received through the first beam pattern 11 is $P_{1,a}$. The magnitude of a CIR of the direct waves received through the second beam pattern 12 is $P_{0,b}$, and the magnitude of the reflected waves received through the second beam pattern 12 is $P_{1,b}$.

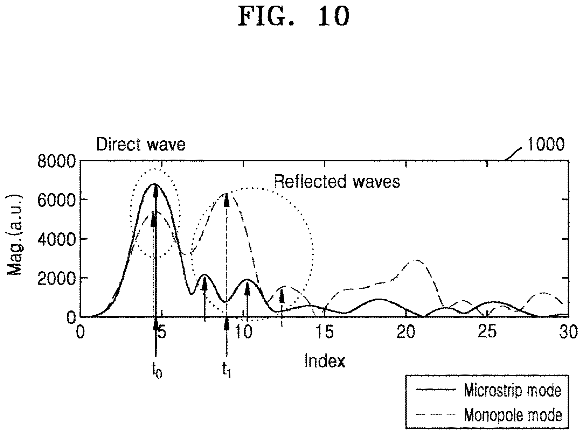

A method of obtaining the magnitudes of CIRs of direct waves and reflected waves for each beam pattern will be described in detail with reference to FIG. 10.

FIG. 10 illustrates a graph 1000 indicating a CIR obtained for each beam pattern when the UWB anchor 100 receives a signal from the UWB tag 200 in the environment shown in FIG. 9. The UWB anchor 100 may determine a time point at which direct waves and reflected waves are received, from the CIR indicated in the graph 1000.

Referring to FIG. 10, a first peak of a curve formed by connecting CIRs may correspond to the direct waves, and a second peak may correspond to the reflected waves (e.g., reflected waves with the largest signal strength among many reflected waves). Thus, a first region 1010 including the first peak corresponds the direct waves, and a second region 1020 including the second peak corresponds to the reflected waves. In fact, influence of the reflected waves may exist over a very wide time range, but it is difficult to reflect all influences, and thus according to an embodiment, reflected waves alone, which have a substantially effective influence, are considered.

As in the embodiment shown in FIG. 9, to calculate a magnitude ratio of CIRs for respective beam patterns with respect to direct waves and reflected waves, time points $t_0$ and $t_1$ at which the direct waves and the reflected waves are received need to be specified. The UWB anchor 100 may specify time points at which the direct waves and the reflected waves are received using various methods. According to an embodiment, across CIRs corresponding to two beam patterns, the UWB anchor 100 may determine a time point at which the first peak appears as the time point $t_0$ at which the direct waves are received and determine a time point at which the second peak appears as the time point $t_1$ at which the reflected waves are received.

When specifying the time points at which the direct waves and the reflected waves are received, the UWB anchor 100 may obtain the magnitudes of CIRs corresponding to the direct waves and the reflected waves for each beam pattern. According to an embodiment, the UWB anchor 100 may obtain the magnitude of the CIR according to the method described with reference to FIG. 6 and Equation 1. For example, the UWB anchor 100 may calculate the magnitude of the CIR of the direct waves through Equation 1 by substituting the magnitudes of first three correlation values after the time point $t_0$ at which the direct waves are received into $F_1$, $F_2$, and $F_3$. The UWB anchor 100 may calculate the magnitude of the CIR of the reflected waves through Equation 1 by substituting the magnitudes of first three correlation values after the time point $t_1$ at which the reflected waves received into $F_1$, $F_2$, and $F_3$. The magnitudes of the CIRs of the direct waves and the reflected waves, calculated for each beam pattern using the method described above, are shown in graphs of FIG. 9.

The UWB anchor 100 may obtain a magnitude ratio of a CIR corresponding to the second beam pattern 12 to a CIR corresponding to the first beam pattern 11 for each of the direct waves and the reflected waves. In the embodiment shown in FIG. 9, a magnitude ratio of a CIR for direct waves is $P_{0,b}/P_{0,a}$, and a magnitude ratio of a CIR for reflected waves is $P_{1,b}/P_{1,a}$.

The UWB anchor 100 may find a direction of the UWB tag 200 based on the two obtained magnitude ratios $P_{0,b}/P_{0,a}$ and $P_{1,b}/P_{1,a}$ of CIRs. The UWB anchor 100 may obtain an incident angle of direct waves from the magnitude ratio of a CIR of the direct waves, obtain an incident angle of reflected waves from the magnitude ratio of the CIR of the direct waves, and specify a direction of the UWB tag 200 when knowing the incident angle of the direct waves and the incident angle of the reflected waves.

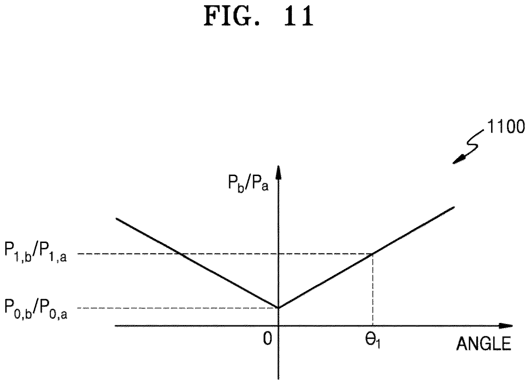

A method of obtaining incident angles of direct waves and reflected waves will be described with reference to FIG. 11. FIG. 11 illustrates a graph 1100 showing a relationship between a magnitude ratio $P_b/P_a$ of a CIR and an incident angle of a signal. For reference, although both the graph 800 of FIG. 8 and the graph 1100 of FIG. 11 are graphs showing a relationship between the magnitude ratio $P_b/P_a$ of a CIR and an incident angle of a signal, the graphs have somewhat different shapes, and as such, a graph showing a relationship between the magnitude ratio $P_b/P_a$ of a CIR and an incident angle of a signal may slightly vary depending on a shape of a beam pattern, a surrounding radio wave environment, antenna characteristics, and the like.

As seen from FIG. 11, an incident angle of radio waves corresponding to a magnitude ratio $P_{0,b}/P_{0,a}$ of a CIR for direct waves may be 0 degree, and an incident angle of radio waves corresponding to a magnitude ratio $P_{1,b}/P_{1,a}$ of a CIR for reflected waves may be $\theta_1$ degrees.

When receiving a signal (radio wave) from the UWB tag 200, the UWB anchor 100 may obtain a combination of an incident angle of direct waves and an incident angle of reflected waves (hereinafter referred to as "incident angle combination") using the process described above. For example, in the embodiment of FIGS. 9 to 11, the UWB anchor 100 may obtain an incident angle combination $(0, \theta_1)$.

The UWB anchor 100 may find a direction of the UWB tag 200 based on the obtained incident angle combination. To this end, the UWB anchor 100 may pre-obtain data about a corresponding incident angle combination for each direction of the UWB tag 200. For example, when the UWB anchor 100 finds a direction of the UWB tag 200 in a fixed position, the UWB tag 200 may transmit a signal while changing the direction of the UWB tag 200, and the UWB anchor 100 may receive the signal to obtain an incident angle combination and may then match and pre-store the direction of the UWB tag 200 corresponding to the incident angle combination.

When considering both direct waves and reflected waves, the UWB anchor 100 may measure a position containing a direction of the UWB tag 200 as well as a distance of the UWB tag 200 based on a magnitude ratio of a CIR for each beam pattern. This is because, when a radio wave environment (e.g., a position of an obstacle that reflects radio waves) is not symmetrical in a reference direction (direction with an angle of 0) of the UWB anchor 100, the position (distance and direction) of the UWB tag 200 corresponding a certain incident angle combination is unique. Therefore, when obtaining the incident angle combination based on a signal received from the UWB tag 200, the UWB anchor 100 may identify the position (distance and direction) of the UWB tag 200 corresponding to the obtained incident angle combination. To this end, the UWB anchor 100 may pre-obtain data about a corresponding incident angle combination for each position of the UWB tag 200. For example, when the UWB anchor 100 finds a position of the UWB tag 200 in a fixed position, the UWB tag 200 may transmit a signal while changing the position of the UWB tag 200, and the UWB anchor 100 may receive the signal to obtain an incident angle combination and may then match and pre-store the position of the UWB tag 200 corresponding to the incident angle combination.

When considering both direct waves and reflected waves, the UWB anchor 100 may know an environment in which a wall or an object are present nearby, and thus may identify a position of the UWB tag 200 using a map of a space in which the UWB devices 100 and 200 are located.

In the case of the embodiments described above, it may be possible to expect an effect of increasing measurement accuracy by also considering reflected waves compared with consideration of direct waves alone.

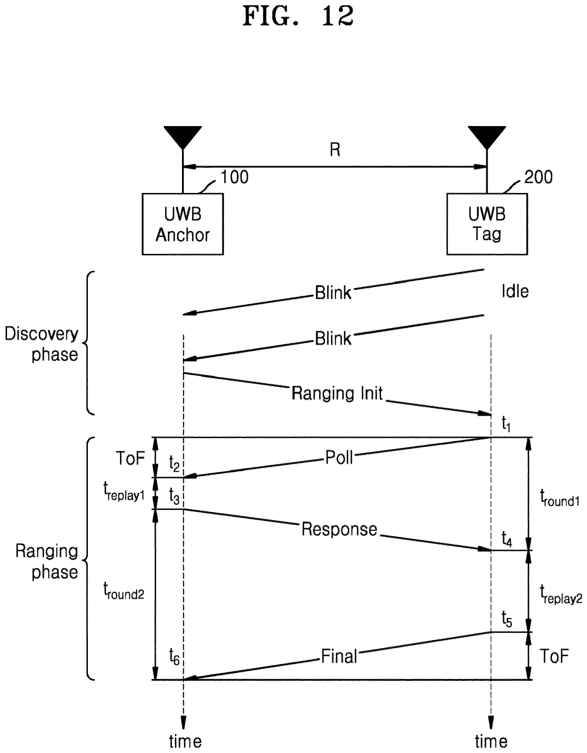

Hereinafter, a two-phase positioning method according to an embodiment will be described with reference to FIGS. 12 to 17. The two-phase positioning method according to an embodiment may include a primary measurement operation of measuring an approximate position of target devices (e.g. the UWB tag 200) and a secondary measurement operation of measuring an exact position of target devices selected based on the primary measurement result.

FIG. 12 illustrates a process in which a signal is transmitted and received between the UWB devices 100 and 200 for positioning. Referring to FIG. 12, the positioning process may include a discovery phase and a ranging phase, and the discovery phase for pairing may be first performed, and when the pairing is completed, positions may be measured by transmitting and receiving messages Poll, Response, and Final between the UWB devices 100 and 200.

The discovery phase may be to discover the UWB tag 200 as a target device for positioning by the UWB anchor 100 and in the discovery phase, pairing between the UWB anchor 100 and the UWB tag 200 may be performed. In the discovery phase, when the UWB tag 200 transmits a blink message to surroundings thereof, the UWB anchor 100 receiving the blink message may transmit a ranging initial message to the UWB tag 200 to initiate the positioning process. The blink message contains identification information of the UWB tag 200, and thus the UWB anchor 100 may identify a device from which the blink message is received and transmit the ranging initial message to the corresponding device.

When the UWB anchor 100 and the UWB tag 200 are paired through the discovery phase, the ranging phase may be successively performed to measure a distance between the UWB anchor 100 and the UWB tag 200. A method of measuring a distance between the UWB anchor 100 and the UWB tag 200 in the ranging phase corresponds to a generally known TWR method using a TOF of a transmitted and received signal, and thus a detailed description thereof is omitted.

In the existing UWB-based positioning technology, pairing between the UWB devices 100 and 200 is performed alone in the discovery phase, and measurement of a distance or direction between the devices is not performed. However, according to an embodiment, the UWB anchor 100 may measure an approximate position (distance and direction) of the UWB tag 200 in the discovery phase (primary measurement) and determine whether to precisely measure the position of the UWB tag 200 based on the primary measurement result (secondary measurement). Therefore, when a plurality of UWB tags 200 exists around the UWB anchor 100, the UWB anchor 100 may perform the primary measurement on the plurality of UWB tags 200 and perform secondary measurement on the selected UWB tag 200 alone based on the primary measurement result. Instead of performing precise positioning on all of surrounding UWB tags 200, the UWB anchor 100 may perform the secondary measurement on some UWB tags 200 that require precise measurement, and thus unnecessary processes may be omitted and a measurement time may be shortened.

In the discovery phase, the UWB anchor 100 may receive the blink message alone, and thus may not know a magnitude of a CIR, but the UWB anchor 100 may approximately identify the distance R to the UWB tag 200 from the magnitude of a CIR of the blink message. In the discovery phase, the UWB anchor 100 may receive the blink message through a plurality of different beam patterns, thereby approximately identifying a direction of the UWB tag 200 using the methods of the embodiments described above.

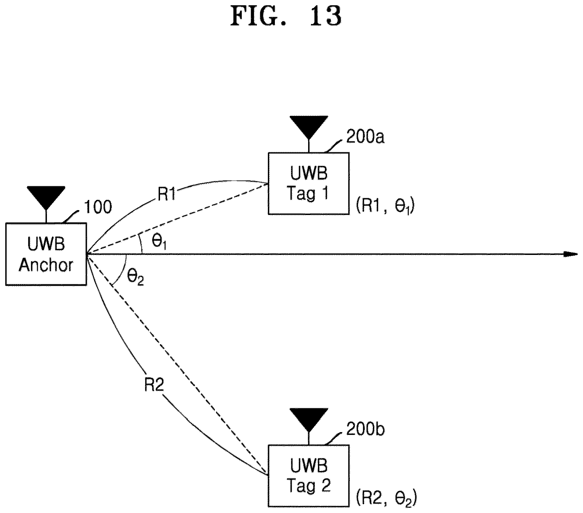

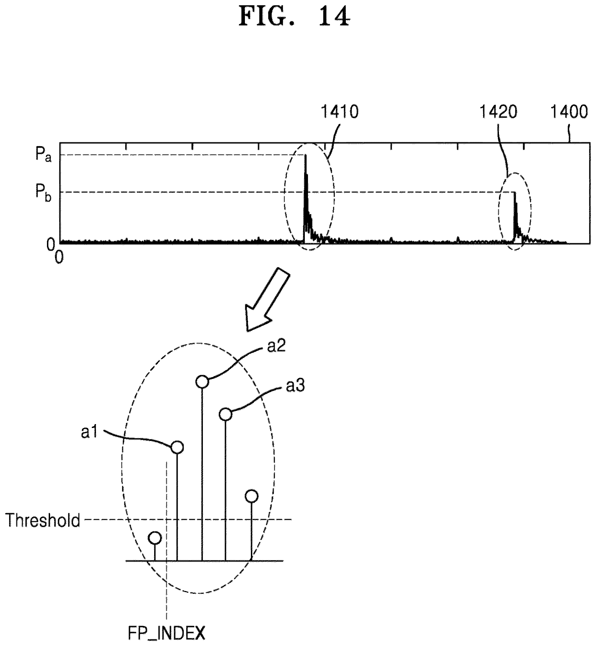

FIGS. 13 shows a situation in which a plurality of UWB tags 200a and 200b exists around the UWB anchor 100. In the situation shown in FIG. 13, a first UWB tag 200a and a second UWB tag 200b may each transmit a blink message to surroundings thereof. The UWB anchor 100 may obtain a direction R1 with the first UWB tag 200a and a direction $\theta_1$ of the first UWB tag 200a, from the blink message received from the first UWB tag 200a. Similarly, the UWB anchor 100 may obtain a direction R2 with the second UWB tag 200b and a direction $\theta_2$ of the second UWB tag 200b, from the blink message received from the second UWB tag 200b. A method of performing primary measurement based on the blink messages received from the UWB tags 200a and 200b by the UWB anchor 100 will be described with reference to FIG. 14.

A graph 1400 of FIG. 14 shows CIRs corresponding to the blink messages received from the first UWB tag 200a and the second UWB tag 200b by the UWB anchor 100, respectively. A first region 1410 on the graph 1400 corresponds to the blink message received from the first UWB tag 200a, and a second region 1420 corresponds to the blink message received from the second UWB tag 200b.

The UWB anchor 100 may approximately measure the distance R1 to the first UWB tag 200a using the correlation values included in the first region 1410. As a distance between UWB devices decreases, the strength of a received signal increases, and in contrast, as the distance between the UWB devices increases, the strength of the received signal decreases. Therefore, the UWB anchor 100 may calculate a magnitude $P_a$ of a CIR included in the first region 1410 and may approximately predict the distance R1 to the first UWB tag 200a based on the calculated magnitude $P_a$ of the CIR. Similarly, the UWB anchor 100 may calculate a magnitude $P_b$ of a CIR included in the second region 1420 and may approximately predict the distance R2 to the second UWB tag 200b based on the calculated magnitude $P_b$ of the CIR.

According to an embodiment, the UWB anchor 100 may calculate the magnitudes $P_a$ and $P_b$ of the CIR according to the method described above with reference to FIG. 6 and Equation 1. Referring to FIG. 14, the UWB anchor 100 may calculate a magnitude $P_a$ of a CIR included in the first region 1410 by inserting first three correlation values a1, a2, and a3 after a time point FP_INDEX at which a magnitude of a correlation value begins to exceed a threshold in the first region 1410 into $F_1$, $F_2$, and $F_3$ of Equation 1. The UWB anchor 100 may also calculate a magnitude $P_b$ of a CIR included in the second region 1420 using the same method.

When receiving blink messages from the UWB tags 200a and 200b through a plurality of different beam patterns, the UWB anchor 100 may calculate a magnitude ratio of CIRs for each beam pattern with respect to each blink message and obtain the incident angles $\theta_1$ and $\theta_2$ of the blink messages based on the calculated magnitude ratio of the CIRs.

The UWB anchor 100 may identify approximate positions (distances and directions) of the first and second UWB tags 200a and 200b by performing primary measurement in the discovery phase using the method described above.

The UWB anchor 100 may select a UWB device on which secondary measurement is to be performed based on the primary measurement result, and in this regard, a method of selecting a secondary measurement target will be described below.

According to an embodiment, the UWB anchor 100 may select the corresponding UWB tag 200 as a target on which secondary measurement is to be performed when at least one of the distance and direction of the UWB tag 200, which are identified through primary measurement, is less than a threshold. To this end, the threshold may be preset for each of the distance and the direction. For example, in the embodiment shown in FIG. 13, the UWB anchor 100 may compare the distance and direction of the first UWB tag 200a and the second UWB tag 200b with a preset threshold, and when at least one of the distance R2 and the direction $\theta_2$ of the second UWB tag 200b is greater than the threshold, the second UWB tag 200b may be excluded from a secondary measurement target. Alternatively, according to an embodiment, the UWB anchor 100 may select the corresponding UWB tag 200 as a target on which secondary measurement is to be performed when both the distance and direction of the UWB tag 200, which are identified through primary measurement, are less than the threshold.

According to an embodiment, the UWB anchor 100 may perform primary measurement on the UWB tag 200 at least twice, and when any one of the distance and direction of the UWB tag 200 is changed during the primary measurement (or when a degree of change is greater than a preset threshold), the UWB anchor 100 may select the corresponding UWB tag 200 as a secondary measurement target. To perform primary measurement twice or more, the UWB anchor 100 needs to receive a blink message at least twice from the same UWB tag 200. The UWB anchor 100 may determine whether the UWB tag 200 moves and a degree of movement of the UWB tag 200 by performing primary measurement for each received blink message to identify approximate positions of the UWB tag 200 and comparing the positions.

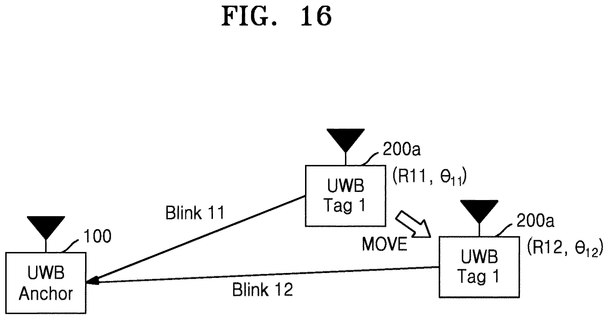

Referring to FIG. 16, the UWB anchor 100 may receive a first blink message Blink 11 from the first UWB tag 200a of a first position (R11, $\theta_{11}$) at a first time point. Then, the first UWB tag 200a moves to a second position (R12, $\theta_{12}$) and transmits a second blink message Blink 12, and the UWB anchor 100 receives the second blink message Blink 12. The UWB anchor 100 may obtain the first position (R11, $\theta_{11}$) from the first blink message Blink 1 and obtain the second position (R12, $\theta_{12}$) from the second blink message Blink 12. A method of measuring the first position (R11, $\theta_{11}$) and the second position (R12, $\theta_{12}$) by performing primary measurement on the first blink message Blink 11 and the second blink message Blink 12 by the UWB anchor 100 is the same as the above description given with reference to FIGS. 13 and 14.

When determining that a position change occurs by comparing the first position (R11, $\theta_{11}$) and the second position (R12, $\theta_{12}$), the UWB anchor 100 may select the first UWB tag 200a as a secondary measurement target. Alternatively, according to an embodiment, when the first position (R11, $\theta_{11}$) and the second position (R12, $\theta_{12}$) are compared with each other and a degree of a position change exceeds a certain reference, the UWB anchor 100 may also select the first UWB tag 200a as a secondary measurement target.

When a secondary measurement target is selected from among a plurality of surrounding UWB tags 200a, the UWB anchor 100 may precisely measure the distance and direction of the selected UWB tags 200. According to an embodiment, as shown in FIG. 12, the UWB anchor 100 may measure a ToF of a signal while transmitting and receiving a message to and from the selected UWB tag 200 and measure a distance with the UWB tag 200 based on the measured ToF. (TWR method) The UWB anchor 100 may calculate a magnitude ratio of CIRs for each beam pattern with respect to messages Poll and Final received from the UWB tag 200 and measure a direction of the UWB tag 200 based on the calculated magnitude ratio of the CIRs. (For a direction finding method, reference is made to the description given with reference to FIGS. 3 to 11)

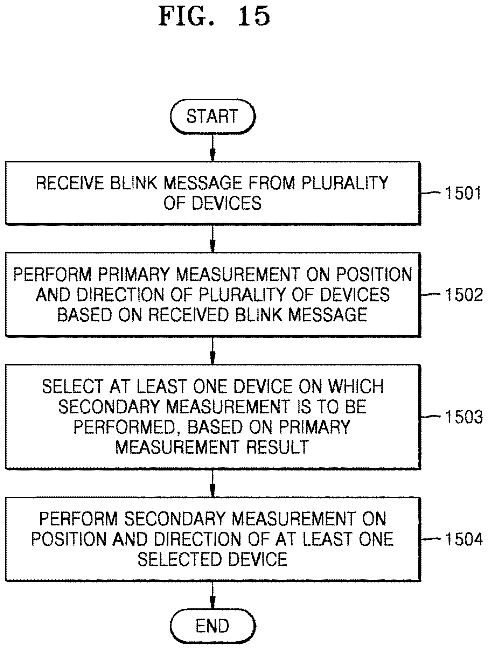

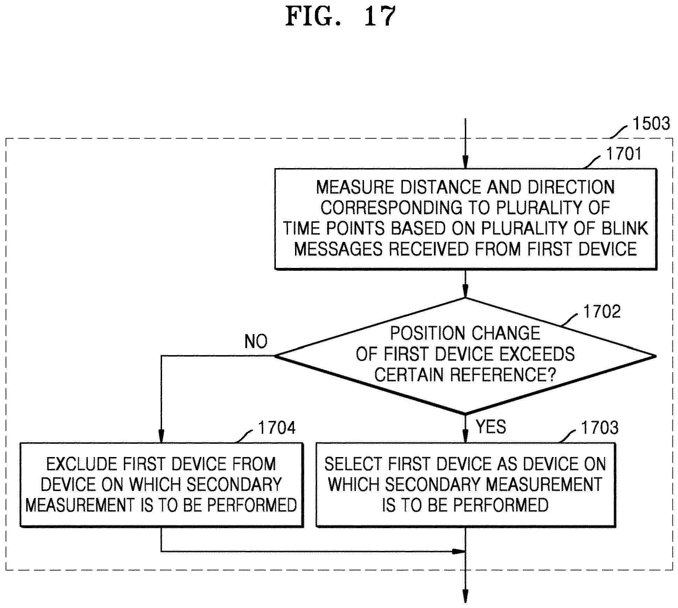

FIGS. 15 and 17 are flowcharts in which operations for performing the two-phase positioning method described above are summarized. Therefore, the description above given with reference to FIGS. 12 to 14 and 16 may be applied in the same way to the flowcharts of FIGS. 15 and 17 even if omitted in FIGS. 15 and 17.

Referring to FIG. 15, in operation 1501, the UWB anchor 100 may receive a blink message from a plurality of devices (UWB tags). In operation 1502, the UWB anchor 100 may primarily measure positions and directions of the plurality of devices based on the received blink message. In operation 1503, the UWB anchor 100 may select at least one device on which secondary measurement is to be performed, based on the primary measurement result.

FIG. 17 illustrates detailed operations included in operation 1503 of FIG. 15. Referring to FIG. 17, in operation 1701, the UWB anchor 100 measures the distance and direction corresponding to a plurality of time points based on a plurality of blink messages received from a first device (first UWB tag) (primary measurement).

In operation 1702, the UWB anchor 100 may determine whether a position change of a first device exceeds a certain reference.

As the determination result, when the position change of the first device exceeds the certain reference, operation 1703 is performed, and the UWB anchor 100 selects the first device as a device on which second measurement is to be performed. However, when the position change of the first device does not exceed the certain reference, operation 1704 is performed, and the UWB anchor 100 excludes the first device from devices on which second measurement is to be performed.

Referring back to FIG. 15, in operation 1504, the UWB anchor 100 performs secondary measurement (precise measurement) of a position and direction of at least one selected device.

Hereinafter, a method of implementing an antenna used in embodiments, that is, an antenna with a plurality of beam patterns will be described.

As described above, according to an embodiment, an antenna designed to form a plurality of beam patterns in one antenna (e.g., SRMP antenna including a plurality of feed points formed on one radiator) may be used, and two or more antennas having different beam patterns may also be used. However, at this time, it is not necessary to adjust an interval between antennas because a phase difference is not used in direction finding.

The antenna may form a desired beam pattern by adjusting the position or interval of the feed line and the feed point of the antenna, and may have broadband characteristics suitable for a UWB device by applying a slot feeding structure.

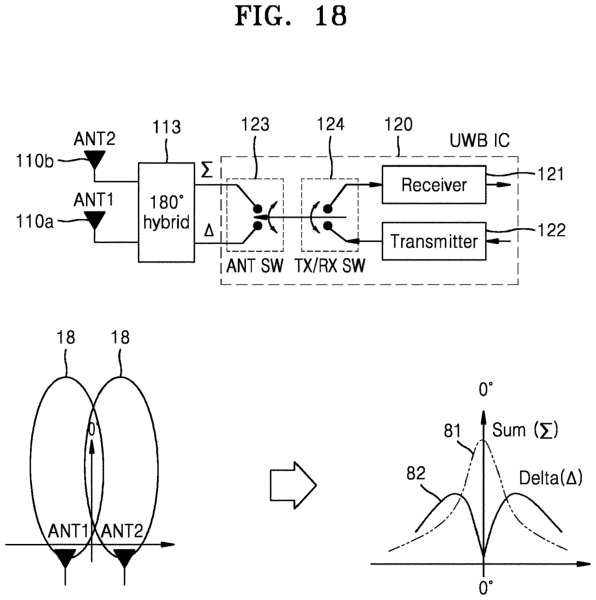

According to an embodiment, two antennas with the same beam pattern may be installed and a 180-degree hybrid module may be used, and thus a sum beam pattern and a delta beam pattern may be controlled to be formed. This will be described with reference to FIG. 18.

Referring to FIG. 18, the antenna 110 includes a first antenna 110a and a second antenna 110b having the same beam pattern 18. A distance between the first antenna 110a and the second antenna 110b may not need to be maintained at a half-wavelength distance. There is no particular constraint in the distance between the antennas 110a and 110b, but to effectively generate the sum and delta beam patterns, and to reduce an antenna installation space, the antennas 110a and 110b may be located at an interval within a half wavelength.

A 180-degree hybrid module 113 may be connected to the two antennas 110a and 110b to change a direction of a current supplied to an antenna through switching, and thus two different beam patterns may be formed. A sum beam pattern 81 and a delta beam pattern 82 formed using the method are shown in FIG. 18. When the sum beam pattern 81 shown in FIG. 18 is referred to as a first beam pattern, and the delta beam pattern is referred to as a second beam pattern, the embodiments described above may be performed using the antennas 110a and 110b of FIG. 18.

According to an embodiment, as shown in FIG. 5C, embodiments may be performed using an antenna having 360-degree beam characteristics by arranging three antennas in a circle at 120 degrees. According to an embodiment, as shown in FIG. 5D, embodiments may be performed using an antenna having 360-degree beam characteristics by arranging four antennas in a circle at 90 degrees.

According to the embodiments described above, when a direction of a UWB device is found using a plurality of different beam patterns, the following effects may be expected.

    1) Antennas may not need to be installed apart from each other by a half wavelength of a radio wave, and thus an antenna installation space may be reduced, and the antennas may be placed freely.

2) A phase difference is not used, and thus the sensitiveness to phase errors may be overcome.

3) Measurement accuracy does not decrease due to reflected waves, and rather, measurement accuracy increases when the reflected waves are considered.

According to an embodiment, a method of finding a direction of a UWB device using a difference in antenna beam patterns of an antenna may include receiving a signal from a target device through at least one antenna configured to form a plurality of different beam patterns, obtaining a CIR of the received signal for each of the plurality of beam patterns, and finding the direction of the target device based on the CIR.

According to an embodiment, the finding of the direction of the target device may include finding the direction of the target device by comparing magnitudes of CIRs corresponding to different beam patterns.

According to an embodiment, the finding of the direction of the target device may obtaining a magnitude ratio of a CIR corresponding to a second beam pattern to a CIR corresponding to a first beam pattern, obtaining an incident angle of a signal corresponding to the obtained magnitude ratio, and determining the direction of the target device based on the incident angle of the signal.

According to an embodiment, the finding of the direction of the target device may include obtaining the magnitude ratio of the CIR corresponding to the second beam pattern to the CIR corresponding to the first beam pattern with respect to each of direct waves and reflected waves of the signal, obtaining an incident angle of each of the direct waves and the reflected waves based on the obtained magnitude ratio, and determining a position of the target device corresponding to a combination of incident angles of the direct waves and the reflected waves.

According to an embodiment, the receiving of the signal from the target device may include receiving a first segment of the signal in a state in which the first beam pattern is formed in the at least one antenna, changing the second beam pattern to be formed in the at least one antenna based on completion of reception of the first segment, and receiving a second segment of the signal in a state in which the second beam pattern is formed in the at least one antenna.

According to an embodiment, the antenna may include an antenna including a plurality of feed points formed in one radiator.

According to an embodiment, the antenna may be configured by connecting a plurality of antennas having identical beam patterns through a 180-degree hybrid module, and a sum pattern and a delta pattern of the identical beam pattern may be implemented by adjusting a direction of a current flowing in the plurality of antennas.

According to an embodiment, an electronic device for finding a direction using a difference between antenna beam patterns includes an antenna configured to form a plurality of different beam patterns, a memory configured to store a program therein for performing direction finding, and at least one processor, wherein, based on reception of a signal from a target device through the antenna, the processor is configured to obtain a CIR of the received signal for each of the plurality of beam patterns, and find the direction of the target device based on the CIR.

According to an embodiment, in finding the direction of the target device, the processor may find the direction of the target device by comparing magnitudes of CIRs corresponding to different beam patterns.

According to an embodiment, the processor may obtain a magnitude ratio of a CIR corresponding to a second beam pattern to a CIR corresponding to a first beam pattern, obtain an incident angle of a signal corresponding to the obtained magnitude ratio, and determine the direction of the target device based on the incident angle of the signal.

According to an embodiment, the processor may obtain the magnitude ratio of the CIR corresponding to the second beam pattern to the CIR corresponding to the first beam pattern with respect to each of direct waves and reflected waves of the signal, obtain an incident angle of each of the direct waves and the reflected waves based on the obtained magnitude ratio, and determine a position of the target device corresponding to a combination of incident angles of the direct waves and the reflected waves.

According to an embodiment, in receiving the signal from the target device, the processor may receive a first segment of the signal in a state in which the first beam pattern is formed in the at least one antenna, change the second beam pattern to be formed in the at least one antenna based on completion of reception of the first segment, and then receive a second segment of the signal in a state in which the second beam pattern is formed in the at least one antenna.

According to an embodiment, the antenna may be an antenna including a plurality of feed points formed in one radiator.

According to an embodiment, the antenna may be configured by connecting a plurality of antennas having the same beam pattern through a 180-degree hybrid module, and a sum pattern and a delta pattern of the same beam pattern may be implemented by adjusting a direction of a current flowing in the plurality of antennas.

Various embodiments may be implemented or supported by one or more computer programs, and computer programs may be formed from computer-readable program code and may be recorded in a computer-readable medium. In the disclosure, the "application" and "program" are one or more computer programs, software components, command sets, procedures, functions, objects, classes, instances, related data, or parts thereof, which are suitable for implementation in computer readable program code. The "computer-readable program code" may include various types of computer codes including source code, purpose code, and executable code. The "computer-readable medium" may include various types of media to be accessed by a computer, such as read only memory (ROM), random access memory (RAM), hard disk drive (HDD), compact disc (CD), digital video disc (DVD), or various types of memories.

A device-readable storage medium may be provided in the form of a non-transitory storage medium. Here, the "non-transitory storage medium" is a tangible device and may exclude wired, wireless, optical, or other communication links that transmit temporary electrical or other signals. The "non-transitory storage medium" may not distinguish between semi-permanent and temporary storage of data in the storage medium. For example, "non-transitory storage medium" may include a buffer in which data is temporarily stored. A computer-readable medium may be any available medium to be accessed by a computer, and may include volatile and non-volatile media, and separate and non-separated media. The computer-readable medium includes a medium in which data is permanently stored and a medium in which data is stored and overwritten later, such as a rewritable optical disk or an erasable memory device.

According to an embodiment, the method according to the various embodiments disclosed herein may be included in a computer program product and provided. The computer program product may be traded between a seller and a buyer as a product. The computer program product may be distributed in the form of a storage medium (e.g. compact disk read only memory (CD-ROM)) that is to be read on a device, or may be distributed (e.g., downloaded or uploaded) directly or online through an application store or between two user devices (e.g., smartphones). In the case of online distribution, at least some of the computer program products (e.g., downloadable application) may be at least temporarily stored in a device-readable storage medium such as a server of a manufacturer, a server of an application server, or a memory of a relay server, or may be temporarily generated.

The above description of the disclosure is for an example, and one of ordinary skill in the art understands that various changes in form and details may be easily made without changing the technical ideas or required characteristics of the disclosure. For example, the technologies may be performed in a different order from the described methods, and/or the system, structure, device, and circuit described above may be coupled or combined in a different form from the methods described above, or may be replaced or substituted by elements or equivalent objects, thereby achieving appropriate results. Therefore, the above-described embodiments need to be understood as exemplary and not limited in any way. For example, each component described in a single type may be distributed and performed, and similarly, components that are described as distributed may also be performed in a combined form.

The scope of the disclosure is defined by the claims described below rather than the detailed description, and needs to be interpreted as contained in the range of the disclosure or modified form derived from the meaning and range of the claims and an equivalent concept thereof.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the spirit and scope of the disclosure as defined by the following claims.

**Claims**

1. A method of finding a direction of an ultra-wide band (UWB) using a difference between antenna beam patterns, the method comprising:

   receiving a signal from a target device through at least one antenna configured to form a plurality of different beam patterns;
   obtaining a channel impulse response (CIR) of the received signal for each of the plurality of beam patterns; and
   finding the direction of the target device based on the CIR.

2. The method of claim 1, wherein the finding of the direction of the target device includes finding the direction of the target device by comparing magnitudes of CIRs corresponding to different beam patterns.

3. The method of claim 2, wherein the finding of the direction of the target device includes:
   obtaining a magnitude ratio of a CIR corresponding to a second beam pattern to a CIR corresponding to a first beam pattern;

   obtaining an incident angle of a signal corresponding to the obtained magnitude ratio; and
   determining the direction of the target device based on the incident angle of the signal.

4. The method of claim 2, wherein the finding of the direction of the target device includes:

   obtaining the magnitude ratio of the CIR corresponding to the second beam pattern to the CIR corresponding to the first beam pattern with respect to each of direct waves and reflected waves of the signal;
   obtaining an incident angle of each of the direct waves and the reflected waves based on the obtained magnitude ratio; and
   determining a position of the target device corresponding to a combination of incident angles of the direct waves and the reflected waves.

5. The method of claim 1, wherein the receiving of the signal from the target device includes:

   receiving a first segment of the signal in a state in which a first beam pattern is formed in the at least one antenna;
   changing the second beam pattern to be formed in the at least one antenna based on completion of reception of the first segment; and
   receiving a second segment of the signal in a state in which the second beam pattern is formed in the at least one antenna.

6. The method of claim 1, wherein the antenna includes an antenna including a plurality of feed points formed in one radiator.

7. The method of claim 1, wherein the antenna is configured by connecting a plurality of antennas having identical beam patterns through a 180-degree hybrid module, and a sum pattern and a delta pattern of the identical beam pattern are implemented by adjusting a direction of a current flowing in the plurality of antennas.

8. A computer readable recording medium having recorded thereon a program for executing the method of any one of claims 1 to 7 in a computer.

9. An electronic device for finding a direction using a difference between antenna beam patterns, the electronic device comprising:

   an antenna configured to form a plurality of different beam patterns;
   a memory configured to store a program therein for performing direction finding; and
   at least one processor,
   wherein, based on receiving a signal from a target device through the antenna, the processor is configured to obtain a channel impulse response (CIR) of the received signal for each of the plurality of beam patterns, and find the direction of the target device based on the CIR.

10. The electronic device of claim 9, wherein, in finding the direction of the target device, the processor is further configured to find the direction of the target device by comparing magnitudes of CIRs corresponding to different beam patterns.

11. The electronic device of claim 10, wherein the processor is further configured to obtain a magnitude ratio of a CIR corresponding to a second beam pattern to a CIR corresponding to a first beam pattern, obtain an incident angle of a signal corresponding to the obtained magnitude ratio, and determine the direction of the target device based on the incident angle of the signal.

12. The electronic device of claim 10, wherein the processor is further configured to obtain the magnitude ratio of the CIR corresponding to the second beam pattern to the CIR corresponding to the first beam pattern with respect to each of direct waves and reflected waves of the signal, obtain an incident angle of each of the direct waves and the reflected waves based on the obtained magnitude ratio, and determine a position of the target device corresponding to a combination of incident angles of the direct waves and the reflected waves.

13. The electronic device of claim 9, wherein, in the receiving of the signal from the target device, the processor is further configured to receive a first segment of the signal in a state in which the first beam pattern is formed in the at least one antenna, changes the second beam pattern to be formed in the at least one antenna based on completion of reception of the first segment, and then receive a second segment of the signal in a state in which the second beam pattern is formed in the at least one antenna.

14. The electronic device of claim 9, wherein the antenna includes an antenna including a plurality of feed points formed in one radiator.

15. The electronic device of claim 9, wherein the antenna is configured by connecting a plurality of antennas having identical beam patterns through a 180-degree hybrid module, and a sum pattern and a delta pattern of the identical beam pattern are implemented by adjusting a direction of a current flowing in the plurality of antennas.

# FIG. 1

# FIG. 2

# FIG. 3

START

RECEIVE SIGNAL FROM TARGET DEVICE
THROUGH AT LEAST ONE ANTENNA FORMING
PLURALITY OF DIFFERENT BEAM PATTERNS — 301

OBTAIN CIR OF SIGNAL RECEIVED
FOR EACH BEAM PATTERN — 302

FIND DIRECTION OF TARGET DEVICE
BASED ON OBTAINED CIR — 303

END

# FIG. 4

303

OBTAIN MAGNITUDE RATIO OF CIR CORRESPONDING TO SECOND BEAM PATTERN TO CIR CORRESPONDING TO FIRST BEAM PATTERN — 401

OBTAIN INCIDENT ANGLE OF SIGNAL CORRESPONDING TO OBTAINED MAGNITUDE RATIO — 402

DETERMINE DIRECTION OF TARGET DEVICE BASED ON INCIDENT ANGLE OF SIGNAL — 403

# FIG. 5A

# FIG. 5B

110

Port 1
(Microstrip)

123   124  120  121

UWB IC

111

112

Receiver

Port 2
(Monopole)   ANT SW   TX/RX SW   Transmitter

SWITCHING
(Port 1 => Port 2)

122
500b

| UWB PACKET | Preamble | GAP | STS segment 1 | GAP | STS segment 2 | GAP |
|---|---|---|---|---|---|---|

RECEIVE
THROUGH PORT 1

RECEIVE
THROUGH PORT 2

# FIG. 5C

51

51a
51b    51c

ANT1    123        124                    120
110a                                              121
ANT2
110b                                              122
ANT3
110c        TX/RX SW
          ANT SW

⇧ SWITCHING          ⇧ SWITCHING
   (ANT1 ⇒ ANT2)        (ANT2 ⇒ ANT3)

UWB PACKET                                                500c

RECEIVE          RECEIVE          RECEIVE
THROUGH ANT 1    THROUGH ANT 2    THROUGH ANT 3

EP 4 443 188 A1

# FIG. 5D

UWB PACKET ▬▬▬▬▬▬▬▬▬▬▬▬▬▬▬▬▬▬▬▬ 500d

RECEIVE THROUGH ANT 1    RECEIVE THROUGH ANT 2    RECEIVE THROUGH ANT 3    RECEIVE THROUGH ANT 4

SWITCHING (ANT1 => ANT2)    SWITCHING (ANT2 => ANT3)    SWITCHING (ANT3 => ANT4)

EP 4 443 188 A1

# FIG. 6

# FIG. 7

EP 4 443 188 A1

FIG. 8

FIG. 9

EP 4 443 188 A1

# FIG. 10

# FIG. 11

# FIG. 12

# FIG. 13

# FIG. 14

# FIG. 15

START

RECEIVE BLINK MESSAGE FROM PLURALITY OF DEVICES — 1501

PERFORM PRIMARY MEASUREMENT ON POSITION AND DIRECTION OF PLURALITY OF DEVICES BASED ON RECEIVED BLINK MESSAGE — 1502

SELECT AT LEAST ONE DEVICE ON WHICH SECONDARY MEASUREMENT IS TO BE PERFORMED, BASED ON PRIMARY MEASUREMENT RESULT — 1503

PERFORM SECONDARY MEASUREMENT ON POSITION AND DIRECTION OF AT LEAST ONE SELECTED DEVICE — 1504

END

# FIG. 16

# FIG. 17

```
                                                    ⌐1503
                                                    ⌐1701
        ┌──────────────────────────────────────┐
        │   MEASURE DISTANCE AND DIRECTION      │
        │    CORRESPONDING TO PLURALITY OF      │
        │  TIME POINTS BASED ON PLURALITY OF BLINK │
        │   MESSAGES RECEIVED FROM FIRST DEVICE │
        └──────────────────────────────────────┘
                          │
                          ▼
                                      ⌐1702
                   ╱─────────────────────╲
         NO       ╱    POSITION CHANGE     ╲
   ◄─────────────     OF FIRST DEVICE EXCEEDS
                  ╲    CERTAIN REFERENCE?   ╱
                   ╲─────────────────────╱
                          │ YES
         ⌐1704            │        ⌐1703
   ┌──────────────────┐  ┌──────────────────┐
   │ EXCLUDE FIRST    │  │ SELECT FIRST     │
   │ DEVICE FROM      │  │ DEVICE AS DEVICE │
   │ DEVICE ON WHICH  │  │ ON WHICH         │
   │ SECONDARY        │  │ SECONDARY        │
   │ MEASUREMENT IS   │  │ MEASUREMENT      │
   │ TO BE PERFORMED  │  │ IS TO BE         │
   └──────────────────┘  │ PERFORMED        │
                         └──────────────────┘
```

MEASURE DISTANCE AND DIRECTION CORRESPONDING TO PLURALITY OF TIME POINTS BASED ON PLURALITY OF BLINK MESSAGES RECEIVED FROM FIRST DEVICE — 1701

POSITION CHANGE OF FIRST DEVICE EXCEEDS CERTAIN REFERENCE? — 1702

NO

YES

EXCLUDE FIRST DEVICE FROM DEVICE ON WHICH SECONDARY MEASUREMENT IS TO BE PERFORMED — 1704

SELECT FIRST DEVICE AS DEVICE ON WHICH SECONDARY MEASUREMENT IS TO BE PERFORMED — 1703

# FIG. 18

## EUROPEAN SEARCH REPORT

Europäisches
Patentamt
European
Patent Office
Office européen
des brevets

**Application Number**

EP 24 16 3219

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 120 417 B1 (ETHERTRONICS INC [US]) 18 September 2019 (2019-09-18) * paragraph [0006] - paragraph [0013] * * paragraph [0018] - paragraph [0021] * ----- | 1-15 | INV. G01S3/16 G01S3/18 G01S3/20 G01S3/28 |
| A | US 2021/076350 A1 (YANG YI [KR] ET AL) 11 March 2021 (2021-03-11) * paragraph [0111] - paragraph [0113] * * paragraph [0079] * ----- | 1,5,8,9, 13 | ADD. G01S3/04 G01S5/02 |
| A | HONG KE ET AL: "A Learning-Based AoA Estimation Method for Device-Free Localization", IEEE COMMUNICATIONS LETTERS, IEEE SERVICE CENTER, PISCATAWAY, NJ, US, vol. 26, no. 6, 10 March 2022 (2022-03-10) , pages 1264-1267, XP011910966, ISSN: 1089-7798, DOI: 10.1109/LCOMM.2022.3158837 [retrieved on 2022-06-09] * Section II. B * ----- | 4,12 | |
| A | WIELANDT STIJN ET AL: "Indoor Multipath Assisted Angle of Arrival Localization", SENSORS, [Online] vol. 17, no. 11, 2 November 2017 (2017-11-02), page 2522, XP093193926, CH ISSN: 1424-8220, DOI: 10.3390/s17112522 Retrieved from the Internet: URL:https://www.mdpi.com/1424-8220/17/11/2 522/pdf> [retrieved on 2024-08-08] * Section 3.2 and 3.3 * ----- | 4,12 | **TECHNICAL FIELDS SEARCHED (IPC)** G01S |

-/--

The present search report has been drawn up for all claims

| Place of search | Date of completion of the search | Examiner |
|---|---|---|
| Munich | 9 August 2024 | Bomart, Sébastien |

EPO FORM 1503 03.82 (P04C01)

Europäisches
Patentamt

European
Patent Office

Office européen
des brevets

**EUROPEAN SEARCH REPORT**

Application Number

EP 24 16 3219

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2013/002489 A1 (ERAD YARIV [IL] ET AL) 3 January 2013 (2013-01-03) * paragraph [0132] - paragraph [0142] * * paragraph [0155] * ----- | 1,7-9,15 | |

TECHNICAL FIELDS
SEARCHED (IPC)

The present search report has been drawn up for all claims

| Place of search | Date of completion of the search | Examiner |
|---|---|---|
| Munich | 9 August 2024 | Bomart, Sébastien |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 16 3219

09-08-2024

| Patent document cited in search report | | Publication date | Patent family member(s) | | Publication date |
|---|---|---|---|---|---|
| EP 3120417 | B1 | 18-09-2019 | CN | 106575825 A | 19-04-2017 |
| | | | EP | 3120417 A1 | 25-01-2017 |
| | | | US | 2015309152 A1 | 29-10-2015 |
| | | | US | 2018259611 A1 | 13-09-2018 |
| | | | US | 2021190895 A1 | 24-06-2021 |
| | | | US | 2023324493 A1 | 12-10-2023 |
| | | | WO | 2015142883 A1 | 24-09-2015 |
| US 2021076350 | A1 | 11-03-2021 | KR | 20210030180 A | 17-03-2021 |
| | | | US | 2021076350 A1 | 11-03-2021 |
| | | | WO | 2021049749 A1 | 18-03-2021 |
| US 2013002489 | A1 | 03-01-2013 | US | 2013002489 A1 | 03-01-2013 |
| | | | WO | 2011114330 A1 | 22-09-2011 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230036710